# EUROPEAN PATENT APPLICATION

(11) **EP 4 155 920 A1**
(43) Date of publication of application: **29.03.2023**
(21) Application number: 21809854.9
(22) Date of filing: 23.03.2021
(51) Int. Cl.: G06F 9/451

(54) **APPLICATION SCREEN SPLITTING METHOD AND APPARATUS, STORAGE MEDIUM AND ELECTRIC DEVICE**

(30) Priority: 19.05.2020 CN 202010423929
(71) Applicant: GUANGDONG OPPO MOBILE TELECOMMUNICATIONS CORP., LTD., Dongguan, Guangdong 523860 (CN)
(72) Inventor: SHEN, Chen, Dongguan, Guangdong 523860 (CN)
(74) Representative: Ipside
(86) International application number: PCT/CN2021/082349
(87) International publication number: WO 2021/232930

(57) **Abstract**

An application screen splitting method and apparatus, a storage medium and an electronic device. The method comprises: displaying a multi-task interface, in which at least two applications are presented in the interface in a card mode (S101); receiving a first operation for the at least two applications in the multi-task interface (S102); and in response to the first operation, displaying the at least two split-screen applications on a current display interface in a split-screen mode (S 103). The method can simplify the steps of application screen splitting, thereby improving the efficiency of application screen splitting.

## Description

### TECHNICAL FIELD

The present disclosure relates to the field of computers, and in particular to a method of splitting one screen to display more than one applications simultaneously on different display regions, an apparatus, a storage medium, and an electronic device.

### BACKGROUND

Description of the background in the present disclosure relates to the relevant technologies of the present disclosure. The description is for the purposes of illustration and facilitating the understanding of the present disclosure. The description of the background shall not be interpreted as the applicant believing that the technologies of the background occur before the effective filing date of the present disclosure and is the prior art of the present disclosure.

As the communication technology develops, the number of applications on a terminal is increased. Users' daily lives are increasingly inseparable from the applications on the terminal. For example, the user may read books, watch videos, and play games through the applications on the terminal, and may go shopping online and offline through shopping applications on the terminal. Correspondingly, after the terminal is installed with various applications (APP), the user may perform various operations easily.

In order to facilitate the user to use the terminal more conveniently, the terminal provides a function splitting the screen for applications, that is, one screen of the terminal may display interfaces of at least two applications at the same time. In this way, the user may operate the at least two applications. For example, one screen of the terminal may display an interface of a music application and an interface of a communication application, such that the user may chat while watching a song.

### SUMMARY OF THE DISCLOSURE

The present disclosure provides a method of displaying more than one applications simultaneously on one screen, an apparatus, a storage medium, and an electronic device. According to the method, operations of displaying more than one applications simultaneously on one screen may be simplified, and an efficiency displaying more than one applications simultaneously on one screen may be improved. Technical solutions of the present disclosure includes the following.

According to a first aspect, a method of splitting a screen to display at least two applications on different display regions of the split screen is provided and includes:
displaying a multi-task interface, wherein the multi-task interface displays at least two applications, which are presented as cards;
receiving a first operation performed on at least two split applications in the multi-task interface;
displaying the at least two split applications, which receives the first operation , on a display interface, in response to the first operation.

According to a second aspect, an apparatus of splitting a screen to display at least two applications on different display regions of the split screen is provided and include:

A first operation receiving module, configured to: display a multi-task interface, wherein the multi-task interface displays at least two applications, which are presented as cards; and receive a first operation performed on at least two split applications in the multi-task interface; and

A displaying module for displaying at least two applications on different display regions of the split screen, configured to display the at least two split applications, which receives the first operation, on a display interface, in response to the first operation.

According to a third aspect, a computer-readable storage medium is provided and has computer programs stored thereon. The programs, when being executed by a processor, are configured to implement operations of the above method.

According to a fourth aspect, a terminal is provided and includes a memory, a processor and computer programs stored on the memory and executable by the processor. The processor is configured to, when executing the computer programs, implement operations of the above method.

The present disclosure can achieve following technical effects.

According to the present embodiment, the terminal displays the multi-task interface, and at least two applications are presented in the form of cards in the multi-task interface. The terminal receives the first operation on the at least two applications on the multi-task interface that will be displayed simultaneously at different display regions of the split screen. In response to the first operation, the terminal displays the at least two applications simultaneously at different display regions of the current display interface. By receiving the first operation performed by the user on the at least two applications selected from the multi-task interface, the at least two applications selected by the user may be displayed simultaneously at different display regions of the split screen. While displaying the at least two applications simultaneously at different display regions of the split screen, only one operation may be performed. The user may not perform significantly more operations, and the at least two applications can be displayed simultaneously at different display regions of the split screen. The process of displaying the at least two applications simultaneously at different display regions of the split screen may be simplified, the efficiency of displaying the at least two applications simultaneously at different display regions of the split screen may be improved.

### BRIEF DESCRIPTION OF THE DRAWINGS

In order to illustrate technical solutions in the embodiments or in the related art of the present disclosure more clearly, the accompanying drawings used in the description of the embodiments or the related art will be briefly described in the following. Apparently, the drawings in the following description show only some embodiments of the present disclosure, and other drawings may be obtained by any ordinary skilled person in the art based on these drawings without any creative work.
FIG. 1 is a flow chart of a method of displaying more than one applications simultaneously on one screen according to an embodiment of the present disclosure.
FIG. 2 is a schematic view of a multi-task interface involved in method of displaying more than one applications simultaneously on one screen according to an embodiment of the present disclosure.
FIG. 3 shows a scenario of performing a first operation to drag a first application, involved in the method of displaying more than one applications simultaneously on one screen according to an embodiment of the present disclosure.
FIG. 4 shows a scenario of performing a fourth operation, involved in the method of displaying more than one applications simultaneously on one screen according to an embodiment of the present disclosure.
FIG. 5 is a flow chart of another method of displaying more than one applications simultaneously on one screen according to an embodiment of the present disclosure.
FIG. 6 shows a scenario of a multi-task interface displaying an application, which is to be displayed simultaneously with other applications on one screen, involved in the method of displaying more than one applications simultaneously on one screen according to an embodiment of the present disclosure.
FIG. 7 shows a scenario of another multi-task interface displaying an application, which is to be displayed simultaneously with other applications on one screen, involved in the method of displaying more than one applications simultaneously on one screen according to an embodiment of the present disclosure.
FIG. 8 shows a scenario of displaying an associated application, involved in the method of displaying more than one applications simultaneously on one screen according to an embodiment of the present disclosure.
FIG. 9 is a structural schematic view of an apparatus that displays more than one applications simultaneously on one screen according to an embodiment of the present disclosure.
FIG. 10 is a structural schematic view of a module of displaying application interfaces according to an embodiment of the present disclosure.
FIG. 11 is a structural schematic view of another apparatus that displays more than one applications simultaneously on one screen according to an embodiment of the present disclosure.
FIG. 12 is a structural schematic view of an electronic device according to an embodiment of the present disclosure.
FIG. 13 is a structural schematic view of an operating system and a user space according to an embodiment of the present disclosure.
FIG. 14 is an architecture diagram of the Android operating system shown in FIG. 12.
FIG. 15 is an architecture diagram of the IOS shown in FIG. 12.

### DETAILED DESCRIPTION

Technical solutions in the embodiments of the present disclosure will be clearly and completely described below by referring to the drawings in the embodiments of the present disclosure. Obviously, the described embodiments show only a part of but not all of the embodiments of the present disclosure. All other embodiments obtained by any ordinary skilled person in the art based on the embodiments in the present disclosure without creative work shall fall within the scope of the present disclosure.

In the description of the present disclosure, the terms "first", "second", and so on, are only used for descriptive purposes, and shall not be interpreted as indicating or implying relative importance. In the present disclosure, "including", "having", and any variations thereof shall be interpreted as covering non-exclusive inclusions, unless otherwise stated and limited. For example, a process, a method, a system, a product, or a device that includes a series of operations or units is not limited to the listed operations or units, but may further include unlisted operations or units, or include operations or units that are inherent in the process, in the method, in the product or in the device. Any ordinary skilled person in the art may understand specific meanings of the above terms in the context of the present application case-by-case. In addition, in the present disclosure, "plurality" means two or more, unless otherwise specified. The term "and/or" indicates association relationships between two objects. There can be three types of relationships. For example, "A and/or B" can mean: A alone exists, A and B exist at the same time, and B exists alone. The character "/" indicates that the associated objects before and after the "/" are in the "or" relationship.

In the art, a multi-task interface of a terminal may be configured to display more than one application interfaces simultaneously on one screen. The multi-task interface displays a plurality of applications running in a foreground and in a background of the terminal. On the multi-task interface, usually, two applications are simultaneously displayed. A user may firstly select a thumbnail window corresponding to one of the two applications. Subsequently, the user may click a split-screen control (such as a split-screen button) on the selected thumbnail window corresponding to the application. At this moment, the screen of the terminal may display an application interface of the selected application and a user selection interface, and the user may select another application, which is to be displayed simultaneously with the selected application on the screen, from the user selection interface. The user selection interface displays application icons of a plurality of applications installed in the terminal. The user needs to select an application icon of the another application, which is to be displayed simultaneously with the firstly-selected application on the screen, such that an application interface of the another application and the application interface of the firstly-selected application may be displayed simultaneously on one screen. According to the above method, the user needs to operate a plurality of times to display two application interfaces on one screen, and the process may be complicated, resulting in a reduced efficiency of splitting the screen to display two application interfaces.

The present disclosure will be described in detail below by referring to specific embodiments.

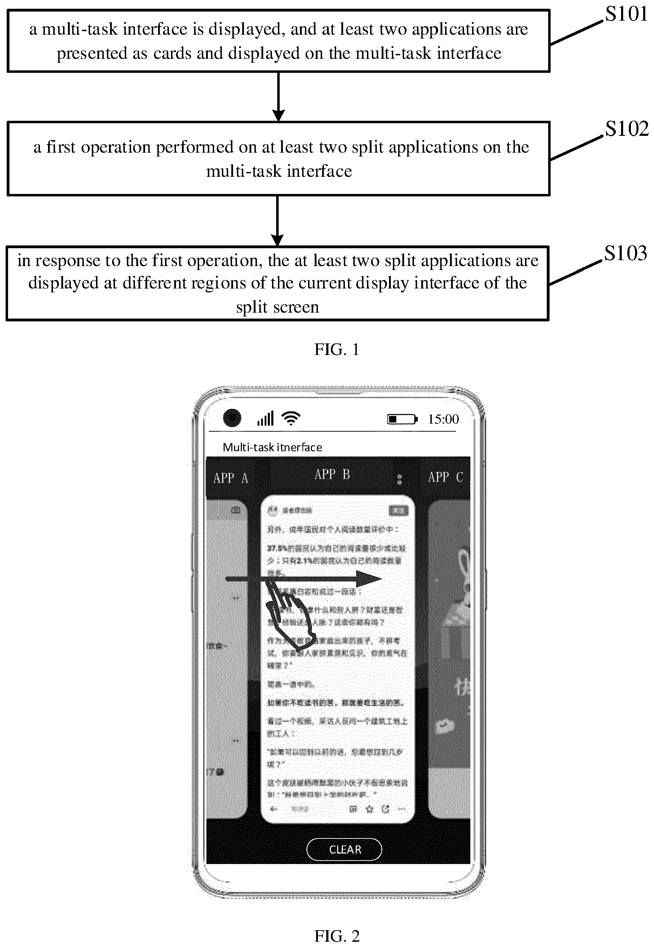

An embodiment, as shown in FIG. 1, provides a method of splitting one screen into at least two display regions to display more than one applications simultaneously. The method may be implemented based on computer programs and may be run on an apparatus of displaying more than one applications simultaneously on one screen, based on the von Neumann system. The computer programs may be integrated in an application or may run as a stand-alone application.

The apparatus of displaying more than one applications simultaneously on one screen may be a terminal. The terminal may be an electronic device that is capable of displaying more than one applications simultaneously on one screen. The terminal includes, but is not limited to: a wearable device, a handheld device, a personal computer, a tablet computer, a vehicle-mounted device, a smart phone, a computing device, and other processing devices connected to a wireless modem, and so on. The terminal may be named differently in different networks. For example, the terminal may be named as: user equipment, an access terminal, a user unit, a user station, a mobile station, a mobile platform, a remote station, a remote terminal, a mobile device, a user terminal, a terminal, a wireless communication device, a user agent or a user apparatus, a cellular telephone, a cordless phone, a personal digital assistant (PDA), a terminal device in the 5G network or in the future evolved network, and so on.

In detail, the method of splitting one screen to display more than one applications simultaneously may include following operations.

In an operation S 101, a multi-task interface is displayed, and at least two applications are presented as cards and displayed on the multi-task interface.

The multi-task interface may be configured by the terminal to enable the user to view recently-performed operations, to quickly close one or more application tasks, to view memory usage and to perform operations to repeatedly switch between two or more applications. On the multi-task interface, at least two applications are displayed in the form of cards. That is, all applications, some of which are currently running in a foreground, and some of which may be running in a background of the terminal, may be displayed on the multi-task interface in the form of cards. In some embodiments, the card may also be referred to as a thumbnail window. In this way, the user may input a corresponding first operation based on the at least two applications displayed on the multi-task interface, such that one screen may be split into two or more display regions to display at least two applications specified by the user simultaneously. Further, for example, usually, in order to allow the user to observe applications running in the background in the multi-task interface, a plurality of applications may be displayed in the multi-task interface. The plurality of applications may be arranged from a left to a right, or from a top to a bottom, or arranged in an arc, or arranged into blocks (such as 6 blocks or 9 blocks). In the present embodiment, the multi-task interface allows the user to split the screen on the multi-task interface for displaying applications that the user desires to display on the split screen.

In an operation S 102, a first operation performed on at least two split applications in the multi-task interface is received.

The first operation is configured to indicate the terminal an instruction and a request that the user requires the at least two split applications in the multi-task interface to be displayed simultaneously on at least two display regions of the split screen. In other words, the first operation may be a controlling code to instruct the terminal to perform computation or function of displaying the at least two split applications simultaneously on at least two display regions of the split screen. In practice, the terminal receives the first operation that the user performs on the at least two split applications on the multi-task interface. The terminal may respond to the first operation, and executes the controlling code to perform computation or function of displaying the at least two split applications simultaneously on the split screen. In this way, the at least two applications are displayed simultaneously on at least two display regions of the split screen.

In detail, the user inputs the first operation on the at least two split applications. The first operation may be performed by various means. The first operation may be a split-screen sliding operation, a split-screen dragging operation, a split-screen pinching operation (such as a multi-finger pinching operation), a split-screen clicking operation, and so on. An object of the first operation may be at least two split applications, which are displayed as cards on the multi-task interface.

In an implementation scenario, for example, the first operation may be the split-screen sliding operation. The terminal has a function of detecting an input operation performed by the user on a current display interface. In response to an activation operation performed by the user on the multi-task interface being detected, the terminal loads the multi-task interface on the current display interface. The terminal may display all applications, which may be running in the foreground and/or in the background, as thumbnail windows on the multi-task display interface. The user may select at least two applications, from a current display interface of the multi-task interface, as split applications and may input the split-screen sliding operation. As shown in FIG. 2, FIG. 2 is a schematic view of a multi-task interface. The current display of the multi-task interface in FIG. 2 displays a thumbnail window of an Application A, a thumbnail window of an Application B and a thumbnail window of an Application C. The user may select two adjacent Applications, the application A and the Application B, as split applications that will be displayed simultaneously on the split screen. Further, the user may slide in a direction indicated by a "black arrow" in FIG. 2 to complete the split-screen sliding operation on the Application A and the Application B. In the above process, the split-screen sliding operation may be performed by the user using a finger to touch a touch screen of the terminal. When the user uses the finger to touch the touch screen of the terminal, a capacitance parameter of a position touched by the finger is changed. A touch frame determines a position of the finger on the touch screen of the terminal based on the change of the capacitance parameter. In the process of the split-screen sliding operation, the terminal monitors the change in the capacitive parameter of the touch screen to obtain, for example, a sliding track of the finger. When the sliding track covers the thumbnail window of the application A and the thumbnail window of the application B, the terminal may take the application A and the application B as the split applications, which are involved in the present split-screen sliding operation. It shall be understood that the split-screen sliding operation of the user may be input for the application A, the application B and an application C along the direction indicated by the black arrow.

Further, the user may determine the split applications by performing the split-screen sliding operation on at least two applications that are not adjacent to each other on the multi-task interface. The user may input the split-screen sliding operation to browse a plurality of applications on the multi-task interface to determine the split applications. While browsing the plurality of applications, the user finger may not leave the touch screen of the terminal. Alternatively, a leave time (such as 2s) may be preset, the terminal may determine a time value corresponding to a time point at which the finger leaves (or releases) the touch screen of the terminal and corresponding to another time point at which the user touches the touch screen again after the leaving. When the time value is within the preset leave time (such as 2s), the terminal may determine that the split-screen sliding operation input by the user is not ended. In a first manner, the terminal may obtain a sliding dwell duration of the split-screen sliding operation by presetting a sliding dwell threshold corresponding to the sliding dwell duration for determining the split applications, and the sliding dwell duration is a length of time that the finger continuously touches the touch screen or stays on the touch screen. Throughout the split-screen sliding operation, the terminal may detect the sliding dwell duration corresponding to each application on the multi-task interface, and may determine any application whose sliding dwell duration is longer than the sliding dwell threshold as the split application. In a second manner, the terminal may obtain a sliding track of the split-screen sliding operation. The terminal may determine an application corresponding to a starting position of the sliding track as a split application, and determine an application corresponding to an ending position of the sliding track as another split application. In this way, two split applications are determined.

Further, in practice, the multi-task interface may involve other operations that the user performs on other applications, such as a processing-cleaning operation on an application, an application locking operation, an operation switching from the multi-task interface to an interface of another application, a second operation (such as a browsing operation) for each application, and so on. In order to distinguish the first operation from the above-mentioned operations, the terminal may designate a target operating region on the current display interface. The user may input the split-screen sliding operations on the at least two split applications in the multi-task interface within the target operating region. The terminal may quickly identify the split-screen sliding operation input by the user on the multi-task interface based on the target operating region.

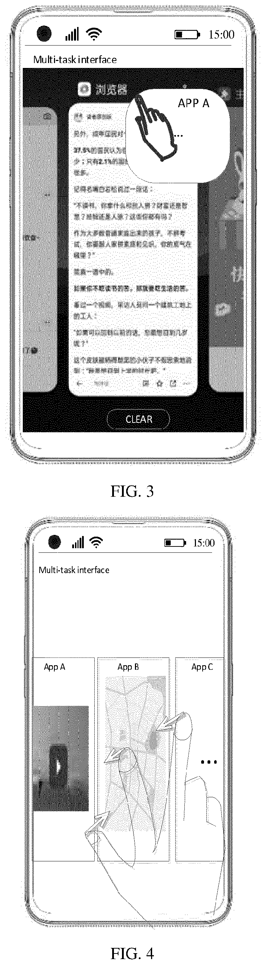

In an implementation scenario, for example, the first operation may be the split-screen dragging operation. In response to the activation operation performed by the user on the multi-task interface being detected, the terminal loads the multi-task interface on the current display interface. The terminal may browse each application displayed on the multi-task interface. The split-screen dragging operation means that, after a displayed object (such as one or more split applications) on the current display interface is selected, the finger performs dragging without leaving the touch screen, and the dragged object (such as one or more split applications) is moved along with the finger during the dragging process. In detail, the user may firstly determine an application A in the multi-task interface of the terminal as a split application, and may perform the split-screen dragging operation on the application A, such that the dragged displayed application A may be selected. After selection, the finger does not leave the screen and drags the application A. At the same time, the terminal may intelligently display each application on the current display screen of the multi-task interface based on a direction of dragging, such as scrolling to display applications involved in the multi-task interface. As shown in FIG. 3, FIG. 3 shows a scenario of performing a first operation to drag an application. The user firstly determines an application A in the multi-task interface as a split application, and drags the application A. In this case, the terminal intelligently displays each application on the current display interface of the multi-task interface based on the direction of the dragging. For example, when the terminal detects that the user drags to move the application A, the applications in the multi-task interface are scrolled to be displayed. While the applications are being scrolled to be displayed, the user may drag the application A and then select a next split application. That is, the user may drag the application A to an application thumbnail window corresponding to the next split application, for example, the "browser" application in FIG. 3 may be selected as the next application, the user may release the application A. At this moment, the split-screen dragging operation on the "browser" application and the application A (i.e., the application A in FIG. 3) may be completed.

Further, in order to allow more than two split applications to be displayed simultaneously on the split screen, a dragging dwell threshold (such as 2s) corresponding to the dragging dwell duration may be preset. That is, when dwell time that the user drags an application to an application thumbnail window corresponding to another application is detected to exceed the dragging dwell threshold (such as 2s), the terminal determines that the application is selected and determines the application to be the split application. The terminal may control the dragged application (i.e., the selected application) to move along with the finger. Similarly, in this way, while performing the split-screen dragging operation, more than two split applications are selected. The terminal may determine that receipt of the split-screen dragging operation input by the user is completed in response to detecting that the finger is released from the touch screen.

Further, in order to allow more than two split applications to be displayed simultaneously on the split screen, an application dragging and selection region may be pre-determined in the application thumbnail window corresponding to each application on the multi-task interface. For example, an upper half of the application thumbnail window may be set as the application dragging and selection region. In detail, when the terminal detects that the user is dragging to move the application A, all applications involved in the multi-task interface will be scrolled to be displayed. While all applications are being scrolled to be displayed, the user may drag the application A and select a next split application. That is, the user may drag the application A to the application dragging and selection region of the application thumbnail window corresponding to the next application (such as the application B). In this way, the terminal may determine that the application B is selected. That is, the terminal may determine the application B is the split application. The terminal may control the dragged object (i.e., the application B) and the application A to move along with the finger. Similarly, in this way, while performing the split-screen dragging operation, more than two applications are selected to be the split applications. When the terminal detects that the user has released the finger from the touch screen, receiving the split-screen dragging operation input by the user may be completed. When the split applications are selected, the split applications may be shown as thumbnail windows that are equally scaled down of the applications, and the thumbnail windows may be displayed along with the dragging. Alternatively, the selected split applications may be shown as corresponding icons of the applications, preset application patterns, and so on, which will not be limited herein.

In an implementation scenario, for example, the first operation may be the split-screen pinching operation (such as the multi-finger pinching operation). The split-screen pinching means that the user controls a plurality of pinching objects (icons, buttons, display windows, and so on), through a plurality of touch points corresponding to the fingers, to move in a direction approaching to each other. In the present embodiment, the split-screen pinching operation may be referred to a split-screen pinching operation input by the user on at least two split applications. When the terminal detects the activation operation performed by the user on the multi-task interface, the terminal loads the multi-task interface on the current display interface, and the multi-task interface displays a plurality of applications running in the foreground and/or in the background. The user may select at least two applications from the current display of the multi-task interface as the split applications. The user may perform the multi-finger pinching operation to respectively select the determined at least two applications and control the at least two applications to move in a direction approaching to each other. That is, the user may input the pinching operation on the at least two applications. It shall be understood that, on the multi-task interface, all applications may be arranged from a left to a right, or from a top to a bottom, or arranged in an arc, or arranged into blocks (such as 6 blocks or 9 blocks). The user may input the split-screen pinching operation on some or all of the applications on the current display screen of the multi-task interface.

Further, in order to enable the split-screen pinching operation to be input easily, the user may slide or drag the multi-task interface to adjust a position of each split application in the multi-task interface. When the user uses the finger to slide or drag the at least two selected split applications in the multi-task interface, each application may be displayed at a relatively suitable position. The relatively suitable position may be referred to a pinching area that can be covered by the split-screen pinching operation (such as a designated region in a middle of the screen). The pinching region may be determined ergonomically based on multiple simulations of the split-screen pinching operation in real-world environments and based on an area that can be covered by multiple fingers and a display size of the terminal. For example, the split applications may be displayed simultaneously on the split screen by a third operation. The third operation may be a sliding operation, a dragging operation, and so on, such that the user may input a fourth operation on each application displayed on each display region of the split screen. The fourth application may be the split-screen pinching operation (such as the multi-finger pinching operation). In practice, the plurality of applications may be displayed on the multi-task interface, such as 6 or 9 applications displayed in 6 or 9 blocks. The user may slide or drag one or more applications, which will be displayed simultaneously on the split screen, by the third operation. The user may slide or drag the applications to display the applications, which will be displayed simultaneously on the split screen, at adjacent positions, such that the user may enter the fourth operation, such as the split-screen pinching operation, on each application easily.

Further, each of the third operation and the fourth operation may be regarded as a sub-operation of the first operation. The third operation being the sliding operation and the fourth operation being the multi-finger pinching operation may be taken as an example for illustration. It shall be understood that, when the user inputs the sliding operation on each application, the finger does not leave the screen when the sliding is completed, and at the same time, the user uses multiple fingers to pinch more than one split applications to enter the multi-finger pinching operation on at least two applications. As shown in FIG. 4, FIG. 4 shows a scenario of performing the fourth operation. On a multi-task interface which displays applications horizontally, as shown in FIG. 4, on the current display interface of the multi-task interface, an area of a thumbnail window of an application in a middle of the current display interface is greater than areas of thumbnail windows of applications located at two sides of the middle application. The application thumbnail window of each application may be moved as the finger moves on the screen. In this case, the user may perform finger touching to perform following operations.

For example, the user may use a middle finger to move the application C, such that the application A, the application B and the application C may be displayed on a same display interface. At the same time, the user may use multiple fingers (such as a thumb, an index finger, the middle finger, and so on) to perform the multi-finger pinching operation on each application, such that the fourth operation (such as the multi-finger pinching operation) on the at least two split applications (such as the application A, the application B, the application C) is input.

In another example, when the user wants to select a certain number of applications to adjust positions of the selected applications, the user may move thumbnail windows of the applications to the current display interface of the multi-task interface, such that each application thumbnail window is displayed on the multi-task interface, and the multi-finger operation may be performed easily. The thumbnail windows of the applications may be moved by the user using the finger to touch the thumbnail windows to adjust positions of one or more applications. For example, the application A (which is originally located at a position where the application C is located) may be moved from a right side in the current display interface shown in FIG. 4 to a left side in the current display interface, i.e., the position where the application A is located in the display interface shown in FIG. 4. It shall be understood that when the user wants to select and adjust a certain application, the user may move an application thumbnail window of the certain application to a predetermined location, such as a middle line, of the multi-task interface. When the user wants to select and adjust a plurality of applications, the plurality of applications may be selected by multiple fingers. For example, the multi-task interface displays a large number of applications, the user may move thumbnail windows of the plurality of applications to a middle of the multi-task interface by the multi-finger operation, such that a proportion of an area occupied by each thumbnail window in the multi-task interface allows the user to perform the fourth operation (such as the multi-finger pinching operation) easily. For example, the original application thumbnail window may be proportionally smaller, or the original application thumbnail window may be partially displayed, and so on.

In an operation S102, in response to the first operation, the at least two applications are displayed at different regions of the current display interface of the split screen.

In detail, when the terminal responds to the first operation to display the applications at different regions of the split screen, the screen may be divided into a plurality of display regions arranged in a vertical direction or a horizontal direction. Taking two display regions as an example, the terminal displays a user interface of one application in one of the two display regions displays a user interface of another application in the other one of the two display regions. The number of display regions is determined based on the number of split applications.

In detail, the terminal may display the at least two applications, which needs to be simultaneously displayed on the split screen, on the current display interface. There may be a plurality of means to split one screen to display at least two applications. For example, an area and a position of each of the at least two applications may be determined based on a predetermined screen splitting direction and a splitting ratio. Alternatively, the means of splitting the screen may be determined based on a screen orientation and/or the number of applications. While displaying the at least two split applications simultaneously on different display regions of the split screen, a region definition manner of the current display interface, i.e., a partitioning manner, may be determined based on the screen orientation, such as a horizontal direction, a vertical direction, and so on. Alternatively, the partitioning manner may be determined based on the number of applications, and the applications refer to selected applications. Alternatively, the partitioning manner may be determined based on historical information of the user. For example, an application may be often displayed in an upper half of the current display interface. When the screen is split to take one display region to display the application, the application may be displayed in the upper half of the current display interface based on the usage habit of the user. Alternatively, a priority level of each application may be determined based on a frequency that the application is used, the number of times that the application is used, a time period that the application is used, and so on. Further, the interfaces of the applications may be displayed simultaneously on different regions of the split screen based on the priority level of the applications.

According to a manner of splitting one screen to display at least two applications simultaneously on different regions of the split screen, a system interface may be split in an up-down direction. That is, the current display interface of the terminal is split into a plurality of display regions from an upper of the interface to a lower of the interface. For example, the current display interface may be split into an upper display region and a lower display region. The upper display region displays an interface of one application, and the lower display region displays an interface of another application. The region for displaying the selected application will not be limited by the present application. That is, the terminal may display the selected applications at random regions, and subsequently provide a control for the user to adjust the regions for displaying the selected applications. The user may perform the adjustment by triggering the control.

According to a manner of splitting one screen to display at least two applications simultaneously on different regions of the split screen, the system interface may be split in a left-right direction. That is, the current display interface of the terminal is split into a plurality of display regions from a left of the interface to a right of the interface. For example, the current display interface may be split into a left display region and a right display region. The left display region displays an interface of one application, and the right display region displays an interface of another application. The region for displaying the selected application will not be limited by the present application. That is, the terminal may display the selected applications at random regions, and subsequently provide a control for the user to adjust the regions for displaying the selected applications. The user may perform the adjustment by triggering the control.

In the present embodiment, the terminal displays the multi-task interface. On the multi-task interface, at least two applications are presented in the form of cards. The terminal receives the first operation performed on at least two split applications displayed on the multi-task interface. In response to the first operation, the terminal displays the at least two split applications on at least two display regions of the split screen. By receiving the first operation performed by the user on the at least two applications on the multi-task interface, the at least two applications selected by the user may be displayed at at least two display regions of the split screen. While splitting the screen to display the at least two applications at at least two display regions simultaneously, only one operation is to be input. The user may not perform an excessive number of operations to allow the at least two applications to be displayed at at least two display regions of the split screen simultaneously. The process of splitting the screen to display the at least two applications at at least two display regions simultaneously may be simplified, and an efficiency splitting the screen to display the at least two applications at at least two display regions simultaneously may be improved.

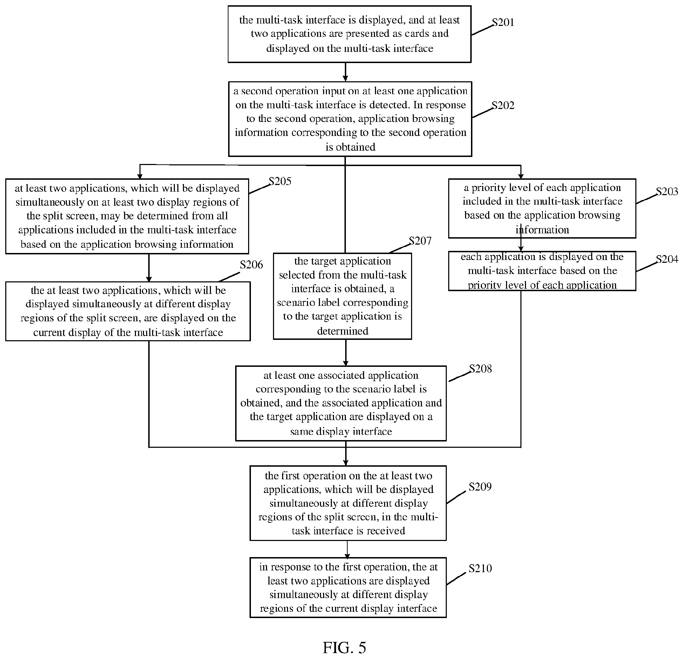

As shown in FIG. 5, FIG. 5 is a flow chart of another method of displaying more than one applications simultaneously on one screen according to an embodiment of the present disclosure.

In an operation S201, the multi-task interface is displayed, and at least two applications are presented as cards and displayed on the multi-task interface.

Detailed operations may be referred to the operation S101 and will not be illustrated herein.

In an operation S202, a second operation input on at least one application on the multi-task interface is detected. In response to the second operation, application browsing information corresponding to the second operation is obtained.

The second operation may be interpreted as follows. The number of application thumbnail windows, which are displayed on the multi-tasking interface and represent applications that are currently running in the foreground and in the background, may be relatively large. It may be difficult to display all application thumbnail windows in the multi-task interface on the current display screen of the terminal. The user may browse the application thumbnail windows on the multi-task interface by performing the second operation (such as the sliding operation or the dragging operation on the application thumbnail windows). In this way, the user may determine the split application that corresponds to the application thumbnail window, based on the application thumbnail windows displayed on the multi-task interface.

In detail, the terminal may have a touch screen, and the touch screen may be a touch screen capable of achieving a single touch function, such as a capacitive touch screen, an electromagnetic touch screen, or a touch screen capable of simultaneously achieving capacitive sensing, electromagnetic sensing, and infrared sensing. The touch screen of the terminal may display the multi-task interface. When the finger of the user touches the multi-task interface displayed on the touch screen of the terminal, such as such as sliding an application thumbnail window corresponding to at least one application on the multi-task interface, a capacitance parameter of the touched position may be changed. The touch frame determines a position of the touch screen touched by the finger based on the change in the capacitance parameter. Alternatively, when the finger touches the touch frame, a receiving end of an infrared element may be blocked and cannot receive an infrared signal. The touch frame determines the position of the display interface touched by the finger based on the blocked infrared signal. The terminal may detect the second operation input by the user on the at least one application on the multi-task interface by identifying touch information (such as a touching position, a touching track, a touching pressure value, and so on) corresponding to logical controlling instructions corresponding to the touching position. It shall be understood that while the terminal detecting the second operation, the second operation of the user may be performed on the application thumbnail window corresponding to at least one application. The terminal may obtain application browsing information, such as a time length that the application is browsed, a sequence of browsing applications (such as a sequence of browsing the plurality of applications), the number of times that the application is browsed, and so on. Specifically, when the terminal detects the second operation performed by the user, the terminal records the browsing information that the user performs on each application on the multi-task interface. For example, the terminal records a time length that the user browses a thumbnail window of an application, the number of times that the user browses a thumbnail window of an application, and so on, such that the operation of obtaining the application browsing information corresponding to the second operation may be achieved.

The second operation is input by the user on at least one application on the multi-task interface. The second operation may be an interface third operation. For example, the user uses the finger to touch the multi-task interface and slides the application thumbnail window of at least one application on the multi-task interface in a certain direction. The second operation may be an interface clicking operation. For example, the user uses the finger to click (single-clicking, double-clicking, and so on) on a location of the multi-task interface, and the terminal controls the multi-task interface to display a next batch of "application thumbnail windows of at least one application", enabling user to browse the application. The second operation may be a control-pressing operation, i.e., a pressing operation performed on a control switch to display application thumbnail windows. For example, the multi-task interface displays a window-switching control, the user may press the window-switching control to allow the terminal to control the multi-task interface to display the next batch of "application thumbnail windows of at least one application".

In an operation S203, a priority level of each application included in the multi-task interface based on the application browsing information.

In an implementation, the terminal may obtain the application browsing information corresponding to the second operation (such as the browsing operation on the thumbnail window of the at least one application). The application browsing information may be the sequence of browsing the applications. In practice, when splitting the screen to display applications simultaneously on different regions, the user may activate the multi-task interface from a display interface of a target application (i.e., a foreground application). The terminal may give priority to display the foreground application on the current display interface. From the perspective of the user, it is highly likely that the user desires determine the foreground application as the application that will be displayed on the split screen. The user may perform the second operation on the application thumbnail window corresponding to the at least one application in the multi-task interface. Further, the terminal may determine the split application, which will be displayed simultaneously with other applications on the split screen, based on the first operation. It shall be understood that the terminal may obtain in advance the sequence of browsing applications corresponding to the second operation based on the second operation and may set a higher priority level for an application browsed in the specified sequence.

For example, a first priority level may be set for the foreground application, which is firstly browsed by the user, and/or a second priority level may be set for an application, which is lastly browsed by the user. Priority levels for the remaining applications browsed by the user may be determined based on an order of time points at which the remaining applications are open or a sequence of the remaining applications being browsed by the user. It shall be understood that the first foreground application and the last application that are browsed by the user may be highly likely to be the applications that the user desires to split the screen to display simultaneously on different regions. Therefore, relatively high priority levels may be set for the two applications. The applications in the multi-task interface may be re-ordered based on the determined priority level of each of the applications before the user inputs the first operation.

In an implementation, the terminal may obtain the application browsing information corresponding to the second operation. The application browsing information may be the time length that the application is browsed by the user. The time length that the application is browsed by the user may refer to a time length that the user spends on observing the thumbnail window of the application. As the time length that the application is browsed by the user increases, the possibility that the user desires to split the screen to display the application at one of the display regions may increase. In the present embodiment, while the user is browsing the applications, the terminal may determine the priority level of each application sequentially based on the time length that each application is browsed by the user. That is, a higher priority level may be set for an application when the time length that the application is browsed by the user is longer.

For example, the application browsing information obtained by the terminal is that the user browses six applications, an application A, an application B, an application C, an application D, an application E, and an application F. The time length that the application A is browsed by the user is 100ms. The time length that the application B is browsed by the user is 50ms. The time length that the application C is browsed by the user is 150ms. The time length that the application D is browsed by the user is 250ms. The time length that the application E is browsed by the user is 350ms. The time length that the application F is browsed by the user is 450ms. Based on the time length that each application is browsed by the user, an order of the priority levels of the applications is: F>E>D>C>A>B.

In an implementation, the terminal may obtain the application browsing information corresponding to the second operation. The application browsing information may be the time length that the application is browsed and the sequence of browsing the applications. The terminal may perform a weighted calculation on each application, based on the time length that the application is browsed and the sequence that the application is browsed, to obtain a score for each application. For example, the terminal may determine a first weighting factor corresponding to the time length that the application is browsed and determine a second weighting factor corresponding to the sequence that the application is browsed. A first product may be the first weighting factor multiplied by the time length that the application is browsed. A second product may be the second weighting factor multiplied by the sequence that the application is browsed. A sum of the first product and the second product may be obtained as the score of the application. The terminal saves a correspondence between the time length that the application is browsed and the first weighting factor and another correspondence between the sequence that the application is browsed and the second weighting factor. In practice, the first weighting factor and the second weighting factor may be determined comprehensively by obtaining a large number of sample data.

When the number of applications on the multi-tasking interface is large, and the user is unable to browse all the applications in the browsing process, priority levels of target applications that have not been browsed by the user may be determined based on an order of the target applications placed on the multi-task interface. The priority levels of target applications may be after the priority levels of the applications that have been browsed by the user. It shall be understood that, in the scenario of splitting one screen to display more than one applications simultaneously on different display regions, a possibility of displaying the target applications that have not been browsed by the user on the split screen may be relatively low.

In an operation S204, each application is displayed on the multi-task interface based on the priority level of each application.

In detail, after the terminal determines the priority level of each application included in the multi-task interface, the applications may be re-ordered to be displayed based on the determined application priority levels. The multi-task interface may require applications to be arranged from the left to the right. In this case, the applications may be arranged from the left to the right based on the priority levels of applications. The multi-task interface may require applications to be arranged from the top to the bottom. In this case, the applications may be arranged from the top to the bottom based on the priority levels of applications. The multi-task interface may require applications to be arranged into an arc. In this case, the applications may be arranged along curvatures corresponding to the arc based on the priority levels of applications. The multi-task interface may require applications to be arranged into blocks (such as 6 blocks or 9 blocks). In this case, the applications may be arranged sequentially into 6 blocks or 9 blocks based on the priority levels of applications.

Further, after the applications are displayed on the multi-task interface based on the priority levels of the applications, in order to enable the user to easily perform the first operation on the at least two split applications selected from the multi-task interface, the terminal may display the applications, and display specifications of the application thumbnail windows corresponding to the applications may be adjustable. For example, the thumbnail window corresponding to each application is proportionally zoomed out, the thumbnail windows may be adjusted to be zoomed out based on a preset zooming-out ratio. In this way, when the number of applications in the multi-task interface is relatively large, the display specification of the thumbnail window corresponding to each application may be adjusted to allow more applications to be displayed on the current display interface. In this way, the user may input the first operation on at least two applications in the multi-task interface.

In an operation S205, at least two applications, which will be displayed simultaneously on at least two display regions of the split screen, may be determined from all applications included in the multi-task interface based on the application browsing information.

In detail, the terminal may determine at least two applications, which will be displayed simultaneously on at least two display regions of the split screen, from all applications included in the multi-task interface based on the application browsing information. From the perspective of the user, it is highly likely that the user may select the at least two applications, which will be displayed simultaneously on at least two display regions of the split screen, as the applications to be displayed on the split screen. Therefore, the terminal may determine at least two applications, which will be displayed simultaneously on at least two display regions of the split screen, and display the at least two applications on the current display interface of the multi-task interface of the terminal. In this way, the terminal may intelligently recommend or identify applications, which will be displayed simultaneously on at least two display regions of the split screen, to the user based on the user's behavioral information (i.e., the application browsing information), and may gather the applications, which will be displayed simultaneously on at least two display regions of the split screen, together and display the gathered applications on the current display interface.

In an implementation, for all applications included in the multi-task interface, for example, the application browsing information may be the time length that the application is browsed. The time length that the application is browsed refers to a time length that the user stays on observing the thumbnail window of the application. The terminal may preset a time length threshold. The time length threshold is a threshold value corresponding to the time length for browsing the application. When the time length of browsing an application is longer than the time length threshold, the probability that the application is to be displayed simultaneously with other applications on the split screen may be high. The terminal may determine the application as the application to be displayed simultaneously with other applications on the split screen. Specifically, the terminal determines an application which is browsed for a time length greater than the time length threshold from all applications based on the time length that each application is browsed. The time length threshold may be a time length threshold determined by the terminal by pre-acquiring a large number of sample data.

Further, the terminal may set a target number of applications to be displayed on the split screen based on a size of the current display interface of the multi-task interface and may determine the applications corresponding to the target number based on the time length that each application is browsed. Alternatively, the terminal may determine any reference application which is browsed for a time length greater than the time length threshold based on the time length that each application is browsed. The terminal may determine applications, which will be displayed simultaneously with other applications on the split screen and are indicated by the target number, from the reference application.

In an implementation, the terminal may obtain the application browsing information corresponding to the second operation. The application browsing information may be the time length that the application is browsed and the sequence that the application is browsed. The terminal may perform weighted calculation on each application, based on the time length that the application is browsed and the sequence that the application is browsed, to obtain the score for each application. The terminal may preset a threshold score and determine an application, which has a score greater than the threshold score, as the application that will be displayed simultaneously with other applications on the split screen. For example, the terminal may determine a third weighting factor corresponding to the time length that the application is browsed and a fourth weighting factor corresponding to the sequence that the application is browsed. A third product may be the third weighting factor multiplied by the time length that the application is browsed. A fourth product may be the fourth weighting factor multiplied by the sequence that the application is browsed. The terminal may obtain a sum of the third product and the fourth product as the score of the application. The terminal may save a correspondence between the third weighting factor and the time length that the application is browsed and another correspondence between the fourth weighting factor and the sequence that the application is browsed. In practice, the terminal may determine the third weighting factor and the fourth weighting factor by obtaining a large number of sample data.

In an operation S206, the at least two applications, which will be displayed simultaneously at different display regions of the split screen, are displayed on the current display of the multi-task interface.

In detail, after the terminal determines at least two applications, which will be displayed simultaneously at different display regions of the split screen, from all applications included in the multi-task interface based on the application browsing information, the terminal arranges the at least two applications in the current display interface of the multi-task interface based on the arrangement manner of the multi-task interface. It shall be understood that displaying the at least two applications in the current display interface of the multi-task interface does not require the user to perform operations such as turning pages or sliding on the multi-task interface. The user may determine selected split applications directly based on the at least two applications which will be displayed on the current display interface, and the selected split applications may be displayed simultaneously at different display regions of the split screen.

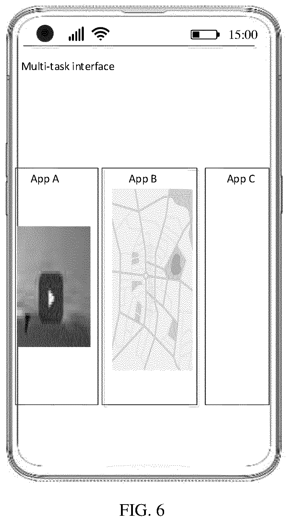

As shown in FIG. 6, FIG. 6 shows a scenario of the multi-task interface displaying applications, which will be displayed simultaneously on one screen. The terminal identifies three applications, an application A, an application B, and an application C, which will be displayed simultaneously at different display regions of the split screen, from all applications included in the multi-task interface based on the application browsing information. The terminal arranges and displays the three applications on the current display screen from the left to the right based on the application arrangement manner of the multi-task interface.

Further, when the number of applications, which are determined to be displayed simultaneously at different display regions of the split screen, is relatively large. That is, the number of applications, which will be displayed simultaneously at different display regions of the split screen, exceeds the maximum number of applications that can be displayed on the multi-task interface. For example, the multi-task interface normally may display three applications, and the number of applications, which will be displayed simultaneously at different display regions of the split screen, is greater than three. In this case, it may be difficult to display all applications, which will be displayed simultaneously at different display regions of the split screen, on a same current display interface if the applications are arranged according to the original arrangement manner of the current display interface of the multi-task interface. At this moment, the terminal may adjust a display specification of the application thumbnail window corresponding to each application. For example, the thumbnail window corresponding to the application may be proportionally zoomed out, the thumbnail window may be zoomed out based on a preset ratio, and so on. In this way, when the number of applications in the multi-task interface is relatively large, more applications may be displayed on the current display interface by adjusting the display specification of the thumbnail window corresponding to each application. In addition, the terminal may change the mode of arranging the thumbnail windows on the multi-task interface to display the applications, which will be displayed simultaneously at different display regions of the split screen, in a suitable manner. For example, the mode of arranging the thumbnail windows from the left to the right may be replaced with the mode of arranging the thumbnail windows into blocks (such as 6 blocks or 9 blocks, and so on), such that more applications, which will be displayed simultaneously at different display regions of the split screen, may be displayed.

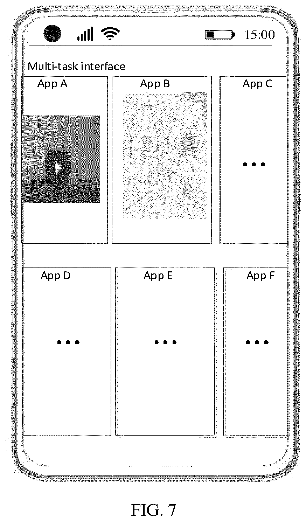

As shown in FIG. 7, FIG. 7 shows a scenario of another multi-task interface displaying applications, which will be displayed simultaneously at different display regions of the split screen. The terminal identifies six applications, an application A, an application B, an application C, an application D, an application E, and an application F, which will be displayed simultaneously at different display regions of the split screen, from all applications included in the multi-task interface based on the application browsing information. An arrangement mode of the multi-task interface is arranging the applications from the left to the right of the interface. In this mode, at most three applications can be displayed on the current display interface. In this case, the terminal may change the arrangement mode of the multi-task interface to display the applications, which will be displayed simultaneously at different display regions of the split screen, in a suitable manner. As shown in FIG. 7, the applications, which will be displayed simultaneously at different display regions of the split screen, are arranged and displayed in 6 blocks.

Further, the terminal may support the arrangement mode of the multi-task interface. Various arrangement modes may allow different numbers of applications to be displayed on the current display interface. After determining the number of applications, which will be displayed simultaneously at different display regions of the split screen, the terminal may obtain a target arrangement mode corresponding to the determined number of applications (that is, an arrangement mode that allows the determined number of applications to be displayed) and may display at least two applications, which will be displayed simultaneously at different display regions of the split screen, based on the target arrangement mode.

In an operation S207, the target application selected from the multi-task interface is obtained, a scenario label corresponding to the target application is determined.

The target application may be understood as a target application determined by the terminal based on the behavioural information of the user. The terminal may determine the target application as an application, which will be displayed simultaneously with other applications on the split screen. To be noted that, in practice, the purpose of determining the target application is to display to the user an application associated with the target application based on the target application, such that the user may perform the first operation based on the associated application and the target application. The associated application may be an application running in the background, an application that is not open, or an application that is not running in the background.

According to a method of determining the target application, the target application may be determined based on a touch operation input by the user. For example, the user browses at least one application in the multi-task interface and performs a corresponding operation on a certain target application (such as clicking or long pressing the target application) to select the target application.

According to a method of determining the target application, the target application may be determined based on operation information performed by the user. When the user triggers the terminal to open the multi-task interface, the user may input the touch operation on an application running in the foreground (i.e., a foreground application). In this case, the terminal may take the foreground application as the selected target application in the multi-task interface. It shall be understood that when the screen is to be split into more than one display regions, it is highly likely that the foreground application will be selected as the split application. The terminal may take the foreground application as the target application.

According to a method of determining the target application, the target application may be determined based on the time length that the user stays on a certain application on the multi-task interface. The terminal displays the multi-task interface, and the user browses at least one application in the multi-task interface. When the time length that the user stays at the thumbnail window corresponding to the application is longer than a preset time length threshold, it may be considered that it is highly likely that the user may select the application to be displayed simultaneously with other applications at different display regions of the split screen. The terminal may take the application as the target application and determine any associated application corresponding to the target application. The terminal may display the associated application and the target application in a same display interface, allowing the user to easily perform the first operation on the target application and the associated application. The associated application may be an application running in the background, an application that is not opened, or an application that is not running in the background.

According to a method of determining the target application, the terminal may take an application of a current display screen of each operation time point as the target application. After the terminal opens the multi-task interface, at least one application is displayed on the current display interface, and the terminal may determine the displayed application as the target application and displays the associated application corresponding to the target application. The terminal may display the target application and the associated application in a same display interface.

In detail, after determining the target application, the terminal may determine a scenario label corresponding to the target application and determine an associated application corresponding to the target application based on the scenario label.

The scenario label is configured to represent an application scenario corresponding to the target application of the terminal. The scenario label includes, but is not limited to, one or more of a shopping scenario label, a navigation scenario label, a leaving scenario label, a travelling scenario label, a food scenario label, an education scenario label, a medical health label, a multimedia scenario label, a gaming scenario label, and so on.

In practice, the terminal may associate at least one application for each scenario label based on at least one preset scenario label. At least one application associated with each scenario label may be obtained by the server based on big data computing and matching. It shall be understood that the scenario label is associated with at least one application. Usually, when the terminal is present at the scenario label, a frequency of opening the associated application may be relatively high, and the associated application may be highly recommended.

For example, associated with the shopping scenario label, an application that is highly frequently used by the user may be: a shopping application, a product recommendation application, a payment application, and so on.

For example, associated with the gaming scenario label, an application that is highly frequently used by the user may be: a live chat application, a messaging application, a video recording application, and so on.

For example, associated with the medical health scenario label, an application that is highly frequently used by the user may be: a registration application, a payment application, a medical health application, and so on.

In an implementation, the terminal may determine the scenario label corresponding to the target application. In detail, the terminal may obtain a notification message associated with the target application, extract semantic feature of the notification message and determine the scenario label corresponding to the target application based on the semantic features.

The notification message may include, but is not limited to, information such as an SMS notification message, an application notification message and a meeting notification message, and so on. The notification message may a sentence or a combination of sentences having a complete and systematic meaning. For example, when textual content of the message is Chinese, the textual content may be a word, a sentence, a paragraph. The notification message may be a practical application form of daily notification content of the application.

The terminal may predict a current scenario belonging to the target application based on various notification messages of the target application. The semantic features are semantic properties specifically included in unstructured data expressed in texts. Taking a paper as an example, the semantic features include semantic elements such as creative intent of an author, a description of a topic of the data, and a meaning of underlying features. The semantic features may express semantics of an object itself and multiple features of semantics in an environment. Taking texts as an example, the semantic features may be constituent letters, an order of words, emotional information of the words, mutual information, and so on.

The constituent letters refers to letters that form a word and an order of the letters.

The order of words is an order of all words that make up one sentence (one meaning).

The emotional information of the word is an emotional meaning expressed by the words in the sentence. The emotional information may be understood as the words in the sentence being positive or negative, high or low, expressing happiness or sadness, and so on.

The mutual information is a statistically independent relationship between words, or between characters, or between categories. The mutual information is configured to assess mutuality between two objects.

In the present embodiment, the semantic features may be understood as semantic features of texts related to the target application. For the notification message, the semantic features may include, but is not limited to, keyword information of the message, word frequency distribution, entity information at a syntactic level, a semantic topic, and so on. The terminal may take the semantic features extracted based on the notification message to predict the scenario label to which the target application belongs.

In detail, the terminal may obtain all notification messages within a certain period (such as within an hour after the target application is opened) and perform a semantic extraction algorithm to extract the semantic features of the notification messages. A common semantic extraction algorithm may be a text feature information extraction method based on a contextual framework, a text feature extraction method based on ontology, a feature extraction method based on conceptual features, and so on. To be noted that there are various methods of extracting the semantic features from the notification messages, one or more of the above methods may be combined. The present disclosure does not limit the methods of extracting the semantic features.

In detail, after extracting the semantic features based on the notification message, the terminal may input the semantic features into a trained scenario determination model and output a scenario label corresponding to the semantic features.

In detail, in practice, the scenario determination model may be any one or a combination of: a deep learning-based scenario analysis algorithm, such as a convolutional neural network (CNN) model, a deep neural network (DNN) model, a recurrent neural network (RNN) model, an embedding model, a gradient boosting decision tree (GBDT) model, a logistic regression (LR) model. In addition, the available neural network models may be optimized by introducing an error back propagation algorithm, such that an output accuracy of the scenario determination model based on the neural network models may be improved. In practice, an initial scenario determination model may be created based on a neural network model CNN. The scenario determination model may be configured by simple non-linear simulation processing elements of each of various nodes being densely interconnected with each other. The scenario determination model may be a system model that mimics biological neurons. In the neural network model, an input of at least one node may be connected to an output of each node, which may be similar to synaptic connections of real neurons. Each neuron expresses a specific output function, i.e., an excitation function. Connection between every two neurons includes a connection strength, i.e., a weighted value for a signal passing through the connection.

In the present embodiment, a large amount of sample data including the semantic features (i.e., the notification messages) may be obtained in advance. The sample data may be preprocessed, and the semantic features in the sample data may be extracted. The semantic features may be input to the initial scenario determination model for training based on the scenario labels already set for the sample data, such that a trained scenario determination model may be obtained. The trained scenario determination model has abilities of extracting semantic features, generalizing semantic feature knowledge, learning, and memorizing. Usually, the information or knowledge learned by the trained scenario determination model is stored on a connection matrix between every two unit node.

To be noted that, the above training process for the scenario determination model may be performed on the terminal or on a server which is communicatively connected to the terminal. For example, the server may train the initial scenario determination model in advance to generate the trained scenario determination model and send an installation package corresponding to the trained scenario determination model to the terminal. The terminal may only need to install the installation package to obtain the trained scenario determination model. The present disclosure does not limit the subject for training the model.

In an implementation, the terminal may obtain current status information of the terminal and determine a scenario label corresponding to the current status information. The status information may be time information, location information, and so on.

In the present disclosure, different status information may correspond to different scenario labels.

For example, the current status information of the terminal may be the time information. The terminal may determine a class of applications from a plurality of applications as the applications that are frequently opened by the user usually at a certain time point, based on records of time points that the plurality of applications are used. The determined applications may correspond to one scenario label, such as a working scenario label, an off-duty scenario label, a meal scenario label. In detail, the terminal may statistically analyze the records of time points that the plurality of applications are used, to obtain usage time information of each of the plurality of applications. Further, the terminal may determine each scenario label defined based on the usage time information. The terminal may determine a time point corresponding to the time information after obtaining the current status information of the terminal and the time information, and determine the scenario label matching the time point.

For example, the current status information of the terminal may be location information. The location information may be understood as a location of the terminal at a current time point, a place occupied by the terminal at the current time point, or an orientation of the terminal at the current time point. The terminal may perform a corresponding location acquisition technology to obtain the location information at the current time point. The location acquisition technology may include, but is not limited to: a wireless positioning technology, a near-range connection technology, a sensor technology, a location image processing technology, and so on. In practice, each scenario label determined based on the location information may correspond to reference location information. After obtaining the location information, the terminal may look for target reference location information corresponding to the location information from reference location information corresponding to each scenario label. The terminal may take the target reference location information as the scene label corresponding to the location information. The scenario labels determined based on. the location information may be a shopping mall scenario label, an underground station scenario label, a high speed rail station scenario label, a tourist attraction scenario label, and so on.

In an operation S208, at least one associated application corresponding to the scenario label is obtained, and the associated application and the target application are displayed on a same display interface.

In detail, after determining the scenario label corresponding to the target application, the terminal may determine at least one associated application associated with the scenario label based on the scenario label. When the number of associated applications under a certain scenario label is excessively large, or when an area of the display interface for displaying the associated applications is limited, the terminal may display associated applications having a higher association level in priority, based on association levels of all the associated applications. The association levels may be determined based on a frequency that the application is used by the user, the number of times that the application is used by the user, a time period that the application is used by the user, and so on. The terminal may display the associated application and the target application on the same display interface. The purpose of determining the target application is to display the application associated with the target application to the user based on the target application, allowing the user to easily perform the first operation based on the target application and the associated application. For example, the user may perform the multi-finger pinching operation to select both the target application and the associated application, and display the target application and the associated application simultaneously at different display regions of the split screen. The associated application may be the application running in the background, or the application that is not opened, or the application that is not running in the background.

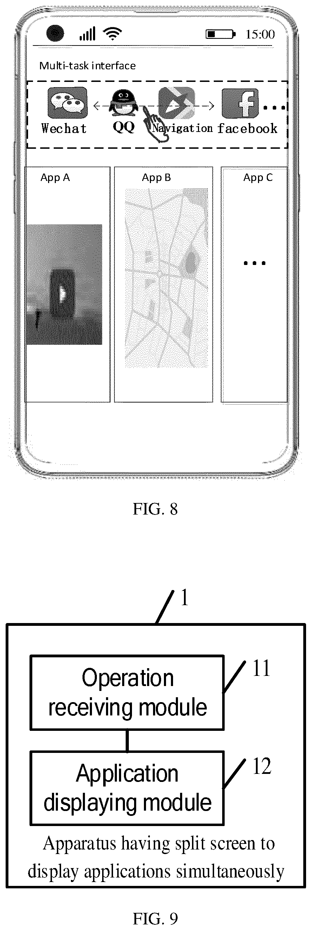

In detail, the terminal may display the associated application in a target region of the current display interface of the multi-task interface. The target region may be configured to display at least one associated application. As shown in FIG. 8, FIG. 8 shows a scenario of displaying the associated application. In FIG. 8, a dashed box region may be configured to display the associated application, and the target application may be displayed in a region below the dashed box region, such that the associated application and the target application are displayed on the same display interface. When the number of associated applications is relatively large, the user may touch the screen to slide in the target region corresponding to the dashed box region to browse corresponding associated applications.

Further, when the terminal displays the associated application, the terminal may display a zoomed-out or a thumbnail of the associated application, such as displaying an icon, a pattern, a control, a screenshot of an interface of a certain size of the associated application, and so on. In this way, the associated application may occupy a smaller area of the display interface.

In an operation S209, the first operation on the at least two split applications in the multi-task interface is received.

Details of the operation S209 may be referred to the operation S101, and will not be repeated herein.

In an operation S210, in response to the first operation, the at least two split applications are displayed simultaneously at different display regions of the current display interface.

Details of the operation S210 may be referred to the operation S 102, and will not be repeated herein.

According to the present embodiment, the terminal displays the multi-task interface, and at least two applications are presented in the form of cards in the multi-task interface. The terminal receives the first operation on the at least two split applications in the multi-task interface. In response to the first operation, the terminal displays the at least two split applications simultaneously at different display regions of the current display interface. By receiving the first operation performed by the user on the at least two applications selected from the multi-task interface, the at least two applications selected by the user may be displayed simultaneously at different display regions of the split screen. While displaying the at least two applications simultaneously at different display regions of the split screen, only one operation may be performed. The user may not perform significantly more operations, and the at least two applications can be displayed simultaneously at different display regions of the split screen. The process of displaying the at least two applications simultaneously at different display regions of the split screen may be simplified, the efficiency of displaying the at least two applications simultaneously at different display regions of the split screen may be improved. In addition, each application included in the multi-task interface may be intelligently adjusted and displayed based on the application browsing information (the time length that the application is browsed, the sequence that the application is browsed, and so on) corresponding to the second operation performed on the multi-task interface before the first operation. For example, each application may be displayed on the multi-task interface based on the determined priority level of each application (i.e., adjusting the order of displaying applications). For example, at least two determined applications, which will be displayed simultaneously at different display regions of the split screen, may be displayed on the current display interface of the multi-task interface. By precisely adjusting the applications on the multi-task interface, displaying the split applications simultaneously at different display regions of the split screen may be achieved quickly. Intelligence of displaying the applications simultaneously at different display regions of the split screen may be improved, further saving time in displaying the applications simultaneously at different display regions of the split screen.

An apparatus embodiment of the present disclosure will be described in the following and may be configured to implement the methods in the above embodiments. Details that are not disclosed in the following embodiments may be referred to the method embodiments of the present disclosure.

FIG. 9 is a structural schematic view of an apparatus that displays more than one applications simultaneously on different display regions of on one screen. The apparatus may be implemented as the entire apparatus or a part of the entire apparatus by software, hardware or a combination thereof. The apparatus 1 includes a first operation receiving module 11 and a displaying module 12 for displaying at least two applications simultaneously at different display regions of a split screen.

The first operation receiving module 11 may be configured to display the multi-task interface, and at least two applications are presented as cards and displayed on the multi-task interface. The first operation receiving module 11 may be configured to receive the first operation performed on the at least two split applications on the multi-task interface.

The displaying module 12 may be configured to, in response to the first operation, display the at least two applications at different regions of the current display interface of the split screen.

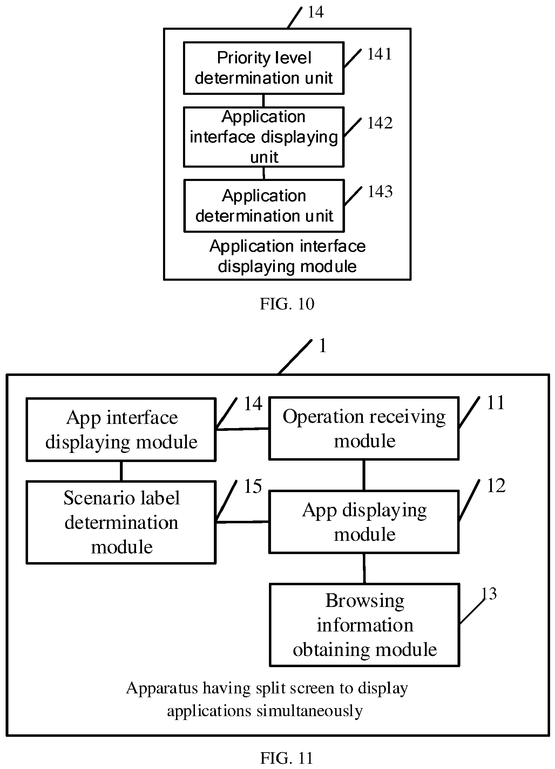

In some embodiments, as shown in FIG. 11, the apparatus 11 may include following components.

A browsing information obtaining module 13 may be configured to detect the second operation input on at least one application on the multi-task interface, and configured to, in response to the second operation, obtain the application browsing information corresponding to the second operation.

An application interface displaying module 14 may be configured to display the application included in the multi-task interface based on the application browsing information.

In some embodiments, as shown in FIG. 10, the application interface displaying module 14 may include following components.

An application priority level determination unit 141 may be configured to determine the priority level of each application included in the multi-task interface based on the application browsing information.

An application interface displaying unit 142 may be configured to display the application on the multi-task interface based on the priority level of the application.

In some embodiments, as shown in FIG. 10, the application interface displaying module 14 may include following components.

An application determination unit 143 may be configured to determine at least two applications, which will be displayed simultaneously at different display regions of the split screen, from all applications included in the multi-task interface based on the application browsing information.

The application interface displaying unit 142 may further configured to display the at least two applications, which will be displayed simultaneously at different display regions of the split screen, on the current display interface of the multi-task interface.

In some embodiments, the application browsing information includes the time length that the applications is browsed, and the application determination unit 143 may be specifically configured to perform the following.

The application determination unit 143 may obtain the application, which will be displayed simultaneously with other applications on the split screen and is browsed for a time length greater than a time length threshold, from all applications included in the multi-task interface.

In some embodiments, as shown in FIG. 11, the apparatus 1 may include the following components.

A scenario label determination module 15 may be configured to obtain a target application selected from the multi-task interface and determine a scenario label corresponding to the target application.

The application interface displaying module 14 may further be configured to obtain at least one associated application corresponding to the scenario label and display the associated application and the target application on a same display interface.

The scenario label determination module 15 may be specifically configured to perform the following.

The scenario label determination module 15 may obtain a notification message associated with the target application, extract semantic feature of the notification message and determine the scenario label corresponding to the target application based on the semantic feature; and/or obtain current status information of the terminal and determine a scenario label corresponding to the current status information.

In some embodiments, the first operation receiving module 11 may be specifically configured to perform the following.

The first operation receiving module 11 may be configured to receive a third operation on at least two split applications selected from the multi-task interface, and configured to, in response to the third operation, display the at least two split applications on the same display interface.

The first operation receiving module 11 may be configured to receive a fourth operation on the at least two split applications.

To be noted that, while the application of the above embodiment is performing the method of displaying at least two applications simultaneously at different display regions of the split screen as described in the above embodiments, the functional modules are illustrated as examples only. In practice, the above functions may be assigned to different functional modules based on the demands. That is, an internal structure of the apparatus may be divided into different functional modules to complete all or part of the above described functions. In addition, the apparatus and the method of displaying at least two applications simultaneously at different display regions of the split screen as described in the above embodiments are based on a same conceptual idea. An implementation process of the apparatus may be referred to the method embodiments and will not be repeated herein.

The serial numbers of the embodiments of the present disclosure are for descriptive purposes only and do not indicate advantages or disadvantages of the embodiments.

The present disclosure further provides a computer storage medium, the computer storage medium may store a plurality of instructions, the instructions may be loaded by a processor to execute the method of displaying at least two applications simultaneously at different display regions of the split screen as described in the above embodiments shown in FIGs. 1 to 8. Details of the execution process may be referred to the description of the embodiments shown in FIGs. 1 to 8, and will not be repeated herein.

The present disclosure further provides a computer program product, storing at least one instruction. The at least one instruction may be loaded by a processor to execute the method of displaying at least two applications simultaneously at different display regions of the split screen as described in the above embodiments shown in FIGs. 1 to 8. Details of the execution process may be referred to the description of the embodiments shown in FIGs. 1 to 8, and will not be repeated herein.

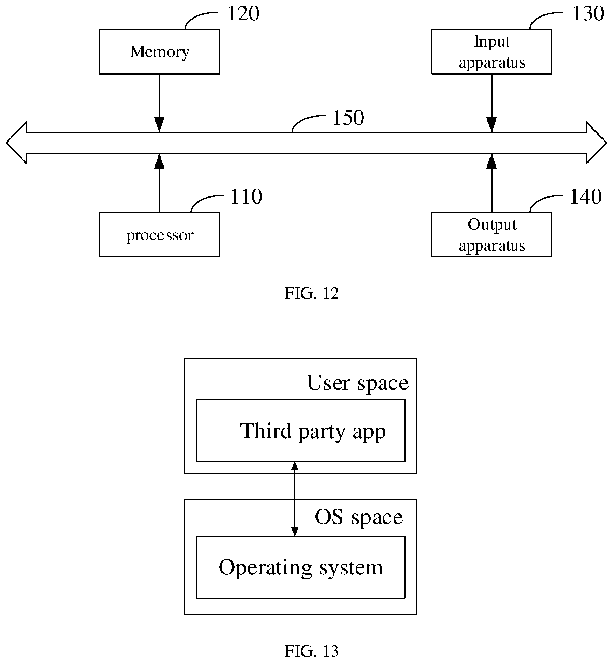

As shown in FIG. 12, FIG. 12 is a structural schematic view of an electronic device according to an embodiment of the present disclosure. The electronic device may include one or more of: a processor 110, a memory 120, an input apparatus 130, an output apparatus 140 and a bus 150. The processor 110, the memory 120, the input apparatus 130 and the output apparatus 140 may be connected to each other via the bus 150.

The processor 110 may include one or more processing cores. The processor 110 takes various interfaces and wires to connect various parts within the entire electronic device. The processor 110 may perform various functions and process data of the electronic device 100 by running or executing instructions, programs, code sets, or instruction sets stored in the memory 120, and by invoking data stored in the memory 120. In some embodiments, the processor 110 may be achieved in the hardware form by taking at least one of a digital signal processing (DSP), a field-programmable gate array (FPGA), a programmable logic array (PLA). The processor 110 may integrate one or a combination of: a central processing unit (CPU), a graphics processing unit (GPU) and a modem. The CPU may substantially process the operating system, the user interface, applications, and so on. The GPU may be configured to render and draw the displayed content. The modem may be configured for wireless communication. It shall be understood that the modem may not be integrated into the processor 110, and may be configured as an independent communication chip.

The memory 120 may include a random access memory (RAM), or a read-only memory (ROM). In some embodiments, the memory 120 may include a non-transitory computer-readable storage medium. The memory 120 may be configured to store instructions, programs, codes, code sets or instruction sets. The memory 120 may include a program storage area and a data storage area. The program storage area may store instructions for implementing an operating system, instructions for implementing at least one function (such as a touch function, a sound playing function, an image displaying function, and so on), instructions for implementing each of the following method embodiments, and so on. The operating system may be the Android operating system, including systems developed based on the Android operating system, or the IOS developed by Apple, including systems developed based on IOS. The data storage area may store data created while the electronic device is being used, such as phone books, audio and video data, chatting data, and so on.

As shown in FIG. 13, the memory 120 may include an operating system space and a user space. The operating system runs in the operating system space, and native and third-party applications run in the user space. In order to ensure various third-party applications to run well, the operating system allocates system resources to the different third-party applications. However, a same third party application may have different demands on system resources in different application scenarios. For example, in a local resource loading scenario, a third party application may require a higher disk reading speed. In an animation rendering scenario, the third party application may require higher GPU performance. However, the operating system and the third party application are independent of each other. The operating system may be unable to sense a current application scenario of the third party application in time, such that the operating system may not be able to adapt system resources to the specific application scenario of the third party application.

In order to enable the operating system to distinguish application scenarios of the third party application, data communication between the third party application and the operating system needs to be fluent, such that the operating system may obtain information about the current scenario of the third party application at any time, and the operating system may perform system resources adaptation based on the current scenario.

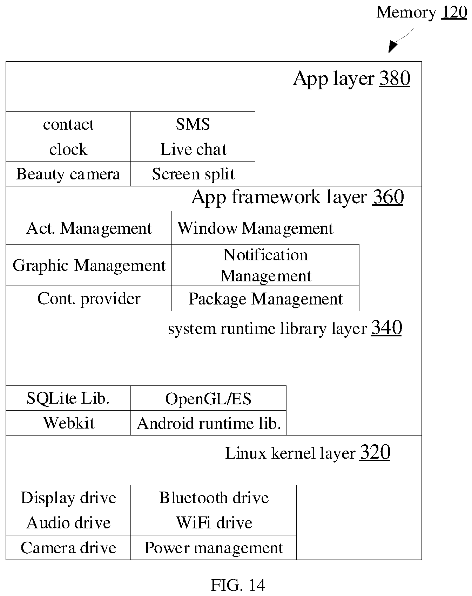

Taking the Android operation system as an example, the programs and data stored in the memory 120 are shown in FIG. 14. The memory 120 may store a Linux kernel layer 320, a system runtime library layer 340, an application framework layer 360 and an application layer 380. The Linux kernel layer 320, the system runtime library layer 340 and the application framework layer 360 belong to the operating system space, and the application layer 380 belongs to the user space. The Linux kernel layer 320 provides an underlying drive for various hardware of the electronic device, a display drive, an audio drive, a camera drive, a Bluetooth drive, a Wi-Fi drive, power management, and so on. The system runtime library layer 340 provides main feature support for the Android system through a number of C/C++ libraries. For example, a SQLite library provides support for databases. An OpenGL/ES library provides support for 3D drawing. A Webkit library provides support for a browser kernel. In the system runtime library layer 340, the Android runtime library is provided and provides core libraries that allow developers to write Android applications using Java. The application framework layer 360 provides various APIs that may be used for establishing applications. Developers may also establish their own applications by using these APIs, such as activity management, window management, view management, notification management, content providers, package management, call management, resource management, and location management. The application layer 380 has at least one application running therein. The application may be a native application that is configured in the operating system, such as a contact application, an SMS application, a clock application, a camera application, and so on; or a third party application developed by a third party developer, such as a gaming application, an instant messaging application, a photo beautying application, a screen splitting application, and so on.

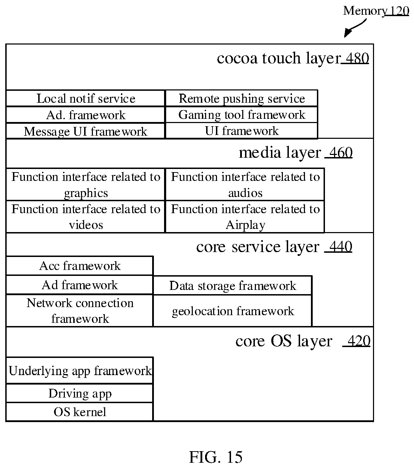

Taking the IOS as an example, programs and data stored in memory 120 are shown in FIG. 15. The IOS system includes a core OS layer 420, a core services layer 440, a media layer 460, and a cocoa touch layer 480. The core OS layer 420 includes the operating system kernel, driving applications and underlying programming frameworks. The underlying programming frameworks provide functionality similar to hardware which may be used by the programming frameworks located in core services layer 440. The core service layer 440 provides the application with system services and/or programming frameworks, such as the foundation framework, the account framework, the advertising framework, the data storage framework, the network connection framework, the geolocation framework, the motion framework, and so on. The media layer 460 provides the application with interfaces for audio-visual aspects, such as interfaces for graphic images, interfaces for audio technologies, interfaces for video technologies, interfaces for air-playing audios and videos, and so on. The cocoa touch layer 480 provides a variety of interface-related frameworks for application development. The cocoa touch layer 480 is responsible for touch interaction between the user and the electronic device, such as a local notification service, a remote pushing service, advertising frameworks, gaming tool frameworks, messaging user interface (UI) frameworks, UIKit frameworks, mapping frameworks, and so on.

For the frameworks shown in FIG. 15, frameworks relevant to most applications include, but are not limited to: a base framework in the core service layer 440 and the UIKit framework in the cocoa touch layer 480. The base framework provides many basic object types and data types and provide the most basic system services for all applications that may be irrelevant to the UI. The UIKit framework provides the basic UI class libraries for creating touch-based user interfaces. The iOS applications may provide UI based on the UIKit framework. Therefore, the UIKit framework provides the infrastructure of the application for building user interfaces, drawing, processing events interacted with the user, responding to gestures, and so on.

The method and principle of the third party applications communicating with the operating system in the IOS may be referred to the Android operating system, and will not be repeated.

The input apparatus 130 may be configured to receive input instructions or data. The input apparatus 130 includes, but is not limited to, a keyboard, a mouse, a camera, a microphone or a touch device. The output apparatus 140 may be configured to output instructions or data, the output apparatus 140 includes, but is not limited to, a displaying apparatus and a speaker, and so on. For example, the input apparatus 130 and the output apparatus 140 may be combined. A touch display may be both the input apparatus 130 and the output apparatus 140. The touch display is configured to receive touch operations performed by the user using any suitable object on or near it, such as using a finger, a touch pen, and so on. The touch display may display user interfaces of various applications. The touch display may be disposed on a front panel of the electronic device. The touch display may be designed as a full-screen, a curved screen or an irregular-shaped screen. The touch display may be configured as a combination of the full screen and the curved screen, or a combination of the curved screen or the irregular-shaped screen, which will not be limited herein.

In addition, any ordinary skilled person in the art shall understand that the structure of the electronic device shown in the accompanying drawings does not limit the electronic device. The electronic device may include more or fewer components than shown in the figure. Alternatively, certain components may be combined for the electronic device, or components in the electronic device may be arranged in another manner. For example, the electronic device may further include RF circuits, input units, sensors, audio circuits, wireless fidelity (WiFi) modules, power supplies, Bluetooth modules and so on, which will not be described herein.

In the present embodiment, the subject of performing each operation may be the electronic device as described above. In some embodiments, the subject of performing each operation may be the operating system of the electronic device. The operating system may be the Android operating system, the IOS, or other operating systems, which will not be limited herein.

According to the present embodiment, the electronic devices may be arranged a displaying apparatus. The displaying apparatus may be a variety of apparatuses that can achieve displaying functions, such as a cathode ray tube display (CR), a light-emitting diode display (LED), an e-ink screen, a liquid crystal display (LCD), a plasma display panel (PDP), and so on. The user may use the display apparatus on the electronic device 101 to view the displayed texts, images, videos and other information. The electronic device may be a smart phone, a tablet computer, a gaming device, an Augmented Reality (AR) device, a car, a data storage device, an audio playing device, a video playing device, a laptop, a desktop computing device, a wearable device such as an electronic watch, electronic glasses, an electronic helmet, an electronic bracelet, an electronic necklace, electronic clothing and so on.

As shown in FIG. 12, the electronic device may be a terminal, and the processor 110 may be configured to invoke an application, which is stored in memory 120 and configured to split the screen into at least two displaying regions to display at least two applications simultaneously, to perform the following operation.

The multi-task interface is displayed, and at least two applications are presented as cards and displayed on the multi-task interface.

The first operation performed on the at least two split applications on the multi-task interface is received.

In response to the first operation, the at least two split applications are displayed simultaneously at different regions of the current display interface of the split screen.

In an embodiment, before receiving the first operation performed on the at least two split applications on the multi-task interface, the processor 110 is further configured to perform the following.

The second operation input on at least one application on the multi-task interface is detected. In response to the second operation, application browsing information corresponding to the second operation is obtained.

All applications included in the multi-task interface are displayed based on the application browsing information.

In an embodiment, before displaying all applications included in the multi-task interface based on the application browsing information, the processor 110 is further configured to perform the following.

The priority level of each application included in the multi-task interface is determined based on the application browsing information, and the application is displayed on the multi-task interface based on the priority level of the application.

In an embodiment, while displaying all applications included in the multi-task interface based on the application browsing information, the processor 110 is further configured to perform the following.

At least two applications, which will be displayed simultaneously at different display regions of the split screen, are determined from all applications included in the multi-task interface based on the application browsing information. The at least two applications, which will be displayed simultaneously at different display regions of the split screen, are displayed on the current display interface of the multi-task interface.

In an embodiment, the application browsing information includes the time length that the applications is browsed. While determining at least two applications, which will be displayed simultaneously at different display regions of the split screen, from all applications included in the multi-task interface based on the application browsing information, the processor 110 is further configured to perform the following.

The application, which will be displayed simultaneously with other applications on the split screen and is browsed for a time length greater than a time length threshold, is obtained from all applications included in the multi-task interface.

In an embodiment, before receiving the first operation performed on the at least two split applications on the multi-task interface, the processor 110 is further configured to perform the following.

A target application selected from the multi-task interface is obtained, and a scenario label corresponding to the target application is determined.

At least one associated application corresponding to the scenario label is obtained, and the associated application and the target application are displayed on a same display interface.

In an embodiment, while determining the scenario label corresponding to the target application, the processor 110 is further configured to perform the following.

A notification message associated with the target application is obtained, semantic features of the notification message are extracted, and the scenario label corresponding to the target application is determined based on the semantic features.

Current status information of the terminal is obtained, and a scenario label corresponding to the current status information is determined.

In an embodiment, while receiving the first operation performed on the at least two split applications on the multi-task interface, the processor 110 is further configured to: receive a third operation on the at least two split applications selected from the multi-task interface, and in response to the third operation, display the at least two split applications on the same display interface.

The processor 110 is further configured to receive a fourth operation on the at least two split applications.

To be noted that, in order to provide a concise description, the above method embodiments are described as a series of operations. Any ordinary skilled person in the art shall understand that the present disclosure is not limited by the sequence of performing the operations. Base on the present disclosure, some operations may be performed in other sequences or simultaneously. Further, any ordinary skilled person in the art shall understand that the embodiments described in the specification are all preferred embodiments, and the operations and modules in the embodiments may not be necessary for the present disclosure. In the above embodiments, the description of the various embodiments focuses on various aspects. Detail that is missing in one embodiment may be referred to relevant description of other embodiments.

The foregoing description shows only exemplary embodiments of the present disclosure and do not limit the scope of the present disclosure. All equivalent variations and modifications made by referring to the present disclosure shall be within the scope of the present disclosure. Any ordinary skilled person in the art may easily obtain other embodiments by considering the specification and practice of the present disclosure. The present disclosure is intended to cover any variation, application or adaptation of the embodiments. The variation, the application or the adaptation follows general principles of the present disclosure and includes commonly known technical means in the art which may not be described in the present disclosure. The description and embodiments are exemplary only, and the scope and the spirit of the disclosure is limited by the appended claims.

## Claims

1. A method of splitting one screen to display at least two applications simultaneously on different display regions of the split screen, comprising:
displaying a multi-task interface, wherein the multi-task interface displays at least two applications, which are presented as cards;
receiving a first operation performed on at least two split applications in the multi-task interface; and
displaying the at least two split applications, which receives the first operation, on a display interface, in response to the first operation.

2. The method according to claim 1, before the receiving a first operation performed on at least two split applications in the multi-task interface, further comprising:
detecting a second operation input on at least one application displayed on the multi-task interface, and obtaining application browsing information corresponding to the second operation in response to the second operation; and
displaying each of the applications comprised in the multi-task interface based on the application browsing information.

3. The method according to claim 2, wherein the displaying each of the applications comprised in the multi-task interface based on the application browsing information, comprises:
determining a priority level of each of the applications comprised in the multi-task interface based on the application browsing information, and displaying the applications on the multi-task interface based on the priority level of each of the applications.

4. The method according to claim 2, wherein the displaying each of the applications comprised in the multi-task interface based on the application browsing information, comprises:
determining at least two applications from the applications comprised in the multi-task interface based on the application browsing information, and displaying the determined at least two applications on a display interface of the multi-task interface.

5. The method according to claim 4, wherein the application browsing information comprises a time length that each of the at least two applications is browsed, and the determining at least two applications from the applications comprised in the multi-task interface based on the application browsing information, comprises:
obtaining an application, which is browsed for the time length greater than a time length threshold, from the applications comprised in the multi-task interface as one of the at least two applications.

6. The method according to claim 1, before the receiving a first operation performed on at least two split applications in the multi-task interface, further comprising:
obtaining a target application selected from the multi-task interface, and determining a scenario label corresponding to the target application; and
obtaining at least one associated application corresponding to the scenario label, and displaying the associated application and the target application on a same display interface.

7. The method according to claim 6, wherein the determining a scenario label corresponding to the target application, comprises:
obtaining a notification message associated with the target application, extracting semantic features of the notification message, determining the scenario label corresponding to the target application based on the semantic features; and/or
obtaining current status information of a terminal, and determining a scenario label corresponding to the current status information.

8. The method according to claim 1, wherein the receiving a first operation performed on at least two split applications in the multi-task interface, comprises:
receiving a third operation on the at least two split applications selected from the multi-task interface, displaying the at least two selected applications on the same display interface in response to the third operation; and
receiving a fourth operation on the at least two split applications.

9. The method according to claim 1, wherein the displaying the at least two split applications, which receives the first operation, on a display interface, comprises:
obtaining the number of the at least two split applications;
adjusting a display specification of a thumbnail window corresponding to each of the at least two split applications, in response to the number of the at least two split applications being greater than the maximum number of applications that can be displayed on the display interface, and displaying the thumbnail window of each of the at least two split applications, which receives the first operation, based on the adjusted display specification.

10. An apparatus of splitting a screen to display at least two applications on different display regions of the split screen, comprising:
a first operation receiving module, configured to: display a multi-task interface, wherein the multi-task interface displays at least two applications, which are presented as cards; and receive a first operation performed on at least two split applications in the multi-task interface;
a displaying module for displaying at least two applications on different display regions of the split screen, configured to display the at least two split applications, which receives the first operation, on a display interface, in response to the first operation.

11. The apparatus according to claim 1, further comprising:
a browsing information obtaining module, configured to detect a second operation input on at least one application displayed on the multi-task interface, and to obtain application browsing information corresponding to the second operation in response to the second operation; and
an application interface displaying module, configured to display each of the applications comprised in the multi-task interface based on the application browsing information.

12. The apparatus according to claim 11, wherein the application interface displaying module comprises:
a priority level determination unit, configured to determine a priority level of each of the applications comprised in the multi-task interface based on the application browsing information; and
an application interface displaying unit, configured to display the applications on the multi-task interface based on the priority level of each of the applications.

13. The apparatus according to claim 12, wherein the application interface displaying module comprises:
an application determination unit, configured to determine at least two applications from the applications comprised in the multi-task interface based on the application browsing information; and
the application interface displaying unit, further configured to display the determined at least two applications on a display interface of the multi-task interface.

14. The apparatus according to claim 13, wherein the application browsing information comprises a time length that each of the at least two applications is browsed, and the application determination unit is configured to:
obtain an application, which is browsed for the time length greater than a time length threshold, from the applications comprised in the multi-task interface as one of the at least two applications.

15. The apparatus according to claim 11, further comprising: a scenario label determination module, configured to obtain a target application selected from the multi-task interface and determine a scenario label corresponding to the target application,
wherein the application interface displaying unit is further configured to obtain at least one associated application corresponding to the scenario label, and display the associated application and the target application on a same display interface.

16. The apparatus according to claim 15, wherein the scenario label determination module is further configured to:
obtain a notification message associated with the target application, extract semantic features of the notification message, determine the scenario label corresponding to the target application based on the semantic features; and/or
obtain current status information of a terminal, and determine a scenario label corresponding to the current status information.

17. The apparatus according to claim 11, wherein the first operation receiving module is further configured to:
receive a third operation on the at least two split applications selected from the multi-task interface, display the at least two selected applications on the same display interface in response to the third operation; and
receive a fourth operation on the at least two split applications.

18. The apparatus according to claim 10, wherein the application displaying module is further configured to:
obtain the number of the at least two split applications; and
adjust a display specification of an thumbnail window corresponding to each of the at least two split applications, in response to the number of applications being greater than the maximum number of applications that can be displayed on the current display interface, and display the thumbnail window of each of the at least two split applications, which receives the first operation, based on the adjusted display specification.

19. A computer-readable storage medium, having computer programs stored thereon, wherein the programs, when being executed by a processor, are configured to implement operations of the method according to any one of claims 1 to 9.

20. A terminal, comprising a memory, a processor and computer programs stored on the memory and executable by the processor, wherein the processor is configured to, when executing the computer programs, implement operations of the method according to any one of claims 1 to 9.
